Europäisches Patentamt

European Patent Office

Office européen des brevets

(19)

(11) Publication number: **0 159 417**
**B1**

# EUROPEAN PATENT SPECIFICATION

(12)

(45) Date of publication of patent specification: **30.03.88**

(51) Int. Cl.⁴: **F 16 D 43/284**

(21) Application number: **84200486.3**

(22) Date of filing: **06.04.84**

(54) Transmission for a motor vehicle.

(43) Date of publication of application:
**30.10.85 Bulletin 85/44**

(45) Publication of the grant of the patent:
**30.03.88 Bulletin 88/13**

(84) Designated Contracting States:
**AT CH DE FR GB IT LI SE**

(56) References cited:
**EP-A-0 027 672**
**EP-A-0 101 151**
**FR-A-2 340 487**
**FR-A-2 449 547**
**GB-A-2 058 251**
**US-A-3 862 676**

(73) Proprietor: **Van Doorne's Transmissie B.V.**
**Dr. Hub van Doorneweg 120 Postbus 500**
**NL-5026 RA Tilburg (NL)**

(72) Inventor: **Cadée, Theodorus Petrus Maria**
**Pastoor de Beeckstraat 11**
**NI-5051 TJ Goirle (NL)**

(74) Representative: **Timmermans, Anthonius C.Th., Ir.**
**European Patent Attorneys Octrooibureau Zuid**
**P.O. Box 2287**
**NL-5600 CG Eindhoven (NL)**

Courier Press, Leamington Spa, England.

## Description

The invention relates to a transmission for a motor vehicle, provided with an infinitely variable V-belt transmission having a primary (driving) pulley which is connected to an annular channel which is radially closed from the outside and into which a stationary pitot tube terminates for sensing the pressure of the fluid present in the channel in order to produce a fluid-pressure signal which depends on the speed of rotation of the primary pulley, and provided with an input shaft which can be connected to the primary pulley through a driving-away clutch.

In such a transmission, which is known from the GB—A—2 058 251, the driving-away clutch consists of a fluid coupling. If such a transmission were to be equipped with a wet plate clutch to serve as driving-away clutch, operation of this clutch would give rise to problems, inasmuch as it is essential for such a wet plate clutch to engage smoothly under all conditions.

It is an object of the present invention to provide a transmission featuring a wet plate clutch as driving-away clutch with permits effective operation of the said clutch.

To this end, the wet plate clutch serving as driving-away clutch is operated by fluid pressure and the input shaft of the transmission is connected to a second annular channel radially closed from the outside into which a second stationary pitot tube terminates for sensing the pressure of the fluid present in the second channel in order to produce a second fluid-pressure signal depending on the speed of rotation of the input shaft. Also provided are a valve which continuously transmits the higher one of the two fluid-pressure signals and means of control for regulating the fluid pressure employed for operation of the wet plate clutch depending on the fluid-pressure signal transmitted.

The use of a pitot tube which is known as such makes it possible in a simple fashion to obtain a hydraulic signal which depends on the angular velocity of the primary pulley (the first fluid-pressure signal) and the input shaft (the second fluid-pressure signal). The second fluid-pressure signal is a measure of the speed of the engine connected to the input shaft and it can be used as control signal in normal driving away from stand-still. In driving-away, first the engine speed is increased by the depression of the accelerator pedal. The increased engine speed causes an increase of the second fluid-pressure signal and this signal effects the engagement of the driving-away clutch through the means of control. As the vehicle, in driving-away, starts moving from stand-still the primary pulley will initially rotate slowly — more slowly than the input shaft as long as the driving-away clutch is not yet fully engaged. In consequence, the first fluid-pressure signal is low, in any case lower than the second fluid-pressure signal, so that the said valve only transmits the second fluid-pressure signal in order to operate the driving-away clutch.

In driving down a slope, problems may crop up if the second fluid-pressure signal is constantly used for operation of the driving-away clutch. When, during driving, the vehicle speed, and hence the engine speed and also by inference the second fluid-pressure signal, drops to such a level that the driving-away clutch becomes disengaged (disconnected), the engine will run at tickover speed as long as the accelerator is not depressed. Now if the vehicle goes faster down the slope again without the accelerator pedal being operated, the second fluid-pressure signal remains too low to effect engagement of the driving-away clutch, which would be desirable. The engagment of the driving-away clutch, being of critical importance under those conditions from safety considerations, will then be performed by the first fluid-pressure signal which depending on the vehicle speed will accordingly rise.

According to another feature of the invention, facilities are provided for influencing the means of control depending on the position of the vehicle's accelerator pedal, in such a fashion that upon further depression of the accelerator pedal the engagement of the clutch occurs at a higher engine speed. Deeper depression of the accelerator pedal can be taken as a signal reflecting the wish to drive-away faster. Engagement of the driving-away clutch at a higher engine speed promotes a faster take-off.

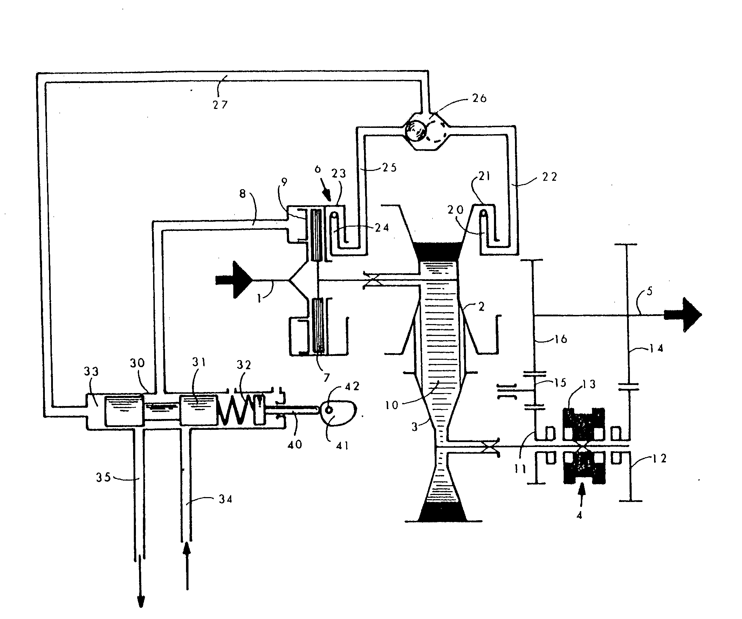

To elucidate the invention, an embodiment will now be described by way of example with reference to the accompanying drawing which is a schematic representation of an embodiment comprising an input shaft 1, a primary pulley 2, a secondary pulley 3, a forward/reverse shift mechanism 4 and an output shaft 5.

The input shaft 1 is connected through a clutch 6 to the primary pulley 2. Clutch 6 consists of a disc 7 which can be clamped by cylinder 9 by means of fluid pressure in line 8, causing the input shaft 1 to be linked to the primary pulley 2.

A V-belt 10 has been looped over the pulleys 2 and 3. The running diameter of belt 10 about the pulleys 2 and 3, can be changed such that the transmission ratio of the primary pulley 2 to the secondary pulley 3 may be adjusted.

The forward/reverse shift mechanism 4 is represented in the form of gears 11 and 12 which can be connected to the secondary pulley 3 by means of the displaceable shift member 13. This arrangement makes it possible to drive the output shaft 5 in one direction through the gears 12 and 14 and in the opposite direction through the gears 11, 15 and 16.

The drawing shows a first, stationary pitot tube 20 terminating into a channel 21 connected to the primary pulley 2. The annular channel 21, which is radially closed from the outside is supplied with fluid rotating in channel 21 with the primary pulley 2. This enables the pitot tube 20 to sense a fluid-pressure signal which is transmitted through line 22 to the valve 26.

In corresponding fashion an annular channel 23 is connected to the input shaft 1, into which channel a second pitot tube 24 terminates for sensing a second fluid-pressure signal which is transmitted through line 25 to valve 26. The higher one of the two fluid-pressure signals is passed on by valve 26 to the control valve 30 via line 27.

Control valve 30 comprises a valve body 31 which is loaded on one side by a spring 32 and on the other side by the fluid pressure in space 33, this being the higher one of the two fluid-pressure signals. Via line 34 fluid is supplied at a sufficient pressure to bring about engagement of clutch 6. Depending on the position of valve body 31, fluid is either passed from line 34 via line 8 to clutch 6 or line 8 is linked to discharge line 35 so that clutch 6 is disengaged.

It will be clear that when the fluid pressure sensed by one of the pitot tubes 20 and 24 is sufficiently high, the valve body moves to the right so that the fluid pressure of line 34 can effect engagement of the clutch. In consequence, the drive-away clutch 6 is engaged both at a sufficient engine speed (fluid-pressure signal of pitot tube 24) and at a sufficient vehicle speed (fluid-pressure signal of pitot tube 20).

The spring 32 can be preloaded through an operating member 40 being in contact with operating cam 41 which is rotatable about pivot 42. The rotation of cam 41 can be linked to the displacement of the accelerator pedal of the vehicle in such a fashion that upon deeper depression of the said accelerator pedal the cam rotates to the right, so that spring 32 is preloaded further. In that case, a higher fluid pressure in space 33 is required to effect engagement of the clutch, so that this engagement occurs at a higher fluid-pressure signal in line 27 and, in consequence, at a higher engine speed.

## Claims

1. A transmission for a motor vehicle, provided with an infinitely variable V-belt transmission (10) having a primary (driving) pulley (2) which is connected to an annular channel (21) which is radially closed from the outside and into which a stationary pitot tube (20) terminates for sensing the pressure of the fluid present in the channel (21) in order to produce a fluid-pressure signal which depends on the speed of rotation of the primary pulley (2), and provided with an input shaft (1) which can be connected to the primary pulley (2) through a driving-away clutch (6), characterized in that the driving-away clutch (6) consists of a wet plate clutch (6) to be operated by fluid pressure, that the input shaft (1) is connected to a second annular channel (23) radially closed from the outside into which a second stationary pitot tube (24) terminates for sensing the pressure of the fluid present in the second channel (23) in order to produce a second fluid-pressure signal depending on the speed of rotation of the input shaft (1), that a valve (26) is present which continuously transmits the higher one of the two fluid-pressure signals and that means of control (30) are provided for the regulation of the fluid pressure employed for operating the wet plate clutch (6) depending on the fluid-pressure signal transmitted.

2. A transmission according to claim 1, characterized in that the means of control (30) are influenced depending on the position of the accelerator pedal of the vehicle, in such a fashion that upon further depression of the accelerator pedal the engagement of the clutch (6) occurs at a higher engine speed.

## Patentansprüche

1. Getriebe für ein Kraftfahrzeug, versehen mit stufenlos variabler V-Treibriemenübertragung (10) mit einer primären (antreibenden) Riemenscheibe (2), die mit einer radial von außen geschlossenen, ringförmigen Rinne (21) verbunden ist, in die ein ortsfestes Pitot-Rohr (20) zur Aufnahme des Drucks einer in der Rinne (21) befindlichen Flüssigkeit einsteckt, um ein Flüssigkeitsdrucksignal zustandezubringen, das von der Drehgeschwindigkeit der primären Riemenscheibe (2) abhängig ist, und mit einer eingehenden Achse (1) versehen, die über ein Anfahrkupplung (6) mit der primären Riemenscheibe (2) gekoppelt werden kann, dadurch gekennzeichnet, daß die Anfahrkupplung (6) aus einer durch einen Flüssigkeitsdruck betätigbaren nassen Scheibenkupplung (6) besteht, daß die eingehende Achse (1) mit einer zweiten radial von außen geschlossenen ringförmigen Rinne (23) verbunden ist, in die ein zweites ortsfestes Pitot-Rohr (24) zur Aufnahme des Drucks der in der zweiten Rinne (23) befindlichen Flüssigkeit einsteckt, um ein zweites Flüssigkeitsdrucksignal zu erzeugen, das von der Drehgeschwindigkeit der eingehenden Achse (1) abhängig ist, daß ein Ventil (26) vorhanden ist, das immer das höchste der beiden Flüssigkeitsdrucksignale weiterleitet und daß Regelmittel (30) vorhanden sind, um den Flüssigkeitsdruck für die von dem weitergeleiteten Flüssigkeitsdrucksignal abhängige Betätigung der nassen Scheibenkupplung (6) zu regeln.

2. Getriebe nach Anspruch 1, dadurch gekennzeichnet, daß die Regelmittel (30) in Abhängigkeit von dem Stand des Gaspedals des Fahrzeugs beeinflußt werden, und zwar in der Weise, daß bei weiterem Durchtreten des Gaspedals das Einrücken der Kupplung (6) bei höherer Motordrehzahl erfolgt.

## Revendications

1. Ensemble de transmission pour un véhicule à moteur, équipé d'une transmission par courroie en V variable sans paliers (10), avec une poulie primaire (motrice) (2) qui est liée à un canal annulaire (21) dont le fond est du côté extérieur en direction radiale et dans lequel plonge un tube de Pitot stationnaire (20) pour détecter la pression du liquide présent dans le canal (21), afin d'engendrer un signal de pression liquide dépendant de la vitesse de rotation de la poulie primaire (2), equipé également d'un axe d'entrée (1) qui peut être relié à la poulie primaire (2) par l'intermédiaire d'un accouplement de démarrage (6), avec la caractéristique que l'accouplement de démarrage (6) consiste en un accouplement humide à plaque actionnable par une pression de liquide, que l'axe d'entrée (1) est lié à un second canal annulaire (23) dont le fond est du côté extérieur en direction radiale et dans lequel plonge un second tube de Pitot stationnaire (24) pour détecter la pression du liquide présent dans le second canal (23), afin d'engendrer un second signal de pression liquide dépendant de la vitesse de rotation de l'axe primaire (1), qu'il y a une valve (26) qui transmet constamment le plus élevé de deux signaux de pression liquide, et qu'il y a des moyens de réglagle (30) pour régler la pression de liquide pour la commande de l'accouplement humide à plaque (6) en fonction du signal de pression liquide transmis.

2. Ensemble de transmission selon la revendication 1, avec la caractéristique que les moyens de réglage (30) sont influencés en fonction de la position de la pédale des gaz du véhicule à moteur, et cela de telle façon que, pour un enfoncement plus profond de la pédale des gaz, l'embrayage de l'accouplement (6) se réalise pour un nombre de tours du moteur plus élevé.